# EUROPEAN PATENT SPECIFICATION

(11) **EP 4 376 198 B1**
(45) Date of publication and mention of the grant of the patent: **06.05.2026**
(21) Application number: 23843263.7
(22) Date of filing: 12.07.2023
(51) Int. Cl.: H01M 50/202, H01M 50/211, H01M 50/358, H01M 50/367

(54) **BATTERY PACK AND DEVICE INCLUDING THE SAME**
BATTERIEPACK UND VORRICHTUNG DAMIT
BLOC-BATTERIE ET DISPOSITIF LE COMPRENANT

(30) Priority: 20.07.2022 KR 20220089758; 11.07.2023 KR 20230090048
(43) Date of publication of application: 29.05.2024
(73) Proprietor: LG Energy Solution, Ltd., Seoul 07335 (KR)
(72) Inventor: PARK, Jeonghoon, Daejeon 34122 (KR); KIM, Soo Youl, Daejeon 34122 (KR); JUNG, Hyemi, Daejeon 34122 (KR)
(74) Representative: Plasseraud IP
(86) International application number: PCT/KR2023/009958
(87) International publication number: WO 2024/019413

(56) References cited:
- EP-A1- 4 325 647
- EP-B1- 2 515 359
- EP-B1- 3 442 050
- KR-A- 20150 007 744
- KR-A- 20160 148 398
- KR-A- 20220 018 796
- KR-B1- 101 678 535
- US-A1- 2006 093 901
- US-A1- 2006 093 901
- US-A1- 2014 322 566

## Description

### [TECHNICAL FIELD]

### Cross Citation with Related Application(s)

This application claims priority benefit of Korean Patent Application No. 10-2022-0089758 filed on July 20, 2022 and Korean Patent Application No. 10-2023-0090048 filed on July 11, 2023 in the Korean Intellectual Property Office.

The present invention relates to a battery pack and a device including the same, and more particularly, a battery pack having high energy density and improved safety against thermal runaway, and a device including the same.

### [BACKGROUND]

As the demands for portable electronic products such as notebooks, video cameras and cellular phones are rapidly increased in these days, and development of electric vehicles, energy storage batteries, robots, satellites, etc. is under active progress, numerous studies are being made on high-performance secondary batteries capable of being repeatedly charged and discharged.

Currently, nickel-cadmium batteries, nickel-hydrogen batteries, nickel-zinc batteries, lithium secondary batteries or the like are commercially available as secondary batteries. Among them, lithium secondary batteries are the center of interest because they hardly have memory effects and can be freely charged or discharged when compared with nickel-based secondary batteries. Advantageously, lithium secondary batteries also exhibit very low self-discharge and high energy density.

The lithium secondary battery generally uses lithium oxide and carbonaceous material as a cathode active material and an anode active material, respectively. The lithium secondary battery includes an electrode assembly in which a cathode plate and an anode plate respectively coated with the cathode active material and the anode active material are disposed with a separator interposed between them, and an exterior material which seals and receives the electrode assembly together with an electrolyte.

Meanwhile, depending on the shape of the battery case, a lithium secondary battery may be classified into a can type secondary battery where the electrode assembly is included in a metal can, and a pouch type battery where the electrode assembly is included in a pouch of an aluminum laminate. In addition, depending on the shape of the metal can, the can type secondary battery may be further classified into a cylindrical battery and a prismatic battery.

Here, the pouch type secondary battery is formed by stacking and winding a cathode, an anode and a separator to form an electrode assembly, housing the electrode assembly in a case sheet, and sealing the edge of the sheet by heat sealing or the like. In addition, the electrode tab drawn out from each electrode may be coupled to an electrode lead, and a part of the electrode lead may protrude outside the edge of the sheet.

In this manner, the pouch type secondary battery can have the flexibility to be configured in various forms. Further, the pouch type secondary battery has the advantage that a secondary battery having the same capacity can be realized with a smaller volume and mass.

Such lithium secondary batteries can be used in the shape of battery modules or battery packs including a plurality of battery cells so as to provide high voltage and high current. The battery module is provided in a shape including a plurality of battery cells inside the module case, and the battery pack may be provided in a shape including at least one or more of such battery modules.

In such a battery pack structure, one of the typically important issues is safety. In particular, when a thermal event occurs in one battery cell among a plurality of battery cells included in the battery pack, such an event need to be suppressed from propagating to other battery cells. If thermal propagation between battery cells is not properly suppressed, this may lead to a thermal event in several battery cells included in the battery pack, which may cause ignition or explosion of the battery pack. Moreover, the ignition or explosion occurred in the battery pack may cause great damage to human life or loss of property in the periphery. Therefore, in the case of such a battery pack, a structure capable of appropriately controlling the above-mentioned thermal event is required.

Battery packs are described in EP 2515359 and in US 2014/0322566.

### [DETAILED DESCRIPTION OF THE INVENTION]

### [Technical Problem]

Therefore, the present invention was designed to solve the problems as above, and an object of the present invention is to provide a battery pack, a device and the like having improved safety by minimizing cascading ignition phenomena even when a thermal runaway phenomenon occurs.

### [Technical Solution]

According to one embodiment of the present invention, there is provided a battery pack according to claim 1.
Embodiments are the object of dependent claims

### [Advantageous Effects]

According to one aspect of the present invention, a large number of pouch type battery cells can be stably housed inside a case without using a configuration such as a stacking frame such as a plastic cartridge or a separate module case.

Moreover, according to one aspect of the present invention, a pouch type battery cell having a soft material case can be easily made into a rigid shape, thereby being able to more easily implement a configuration in which the cells are directly stacked inside the case.

According to a further aspect of the present invention, the safety against gas generated in the cell can be improved. In particular, according to one embodiment of the present invention, a directional venting structure for gas or flame can be implemented to control the direction of gas discharge.

According to a further aspect of the present invention, the energy density, assembling ability, cooling performance, and the like of the battery pack can be improved.

### [BRIEF DESCRIPTION OF THE DRAWINGS]

FIG. 1 is a perspective view of a cell unit according to an embodiment of the present invention;
FIG. 2 is a perspective view of a battery cell according to an embodiment of the present invention;
FIG. 3 is a diagram showing a part of the cell unit according to FIG. 1;
FIG. 4 is a diagram showing a front surface or a rear surface of the cell unit according to FIG. 1;
FIG. 5 is a diagram showing a side surface of the cell unit according to FIG. 1;
FIG. 6 is a diagram showing a gas venting path when a thermal event occurs in a battery cell included in a cell unit according to the present embodiment;
FIG. 7 is a diagram showing a pack case of a battery pack according to the present embodiment;
FIG. 8 is an enlarged view of a section AA of FIG. 7;
FIGS. 9 and 10 are diagrams which schematically illustrate directional venting of a battery pack according to an embodiment of the present invention;
FIG. 11 is a diagram showing a state in which cases are provided for a plurality of cell units according to an embodiment of the present invention; and
FIG. 12 is an enlarged view of the lower surface of the case according to FIG. 11.

### [DETAILED DESCRIPTION OF THE EMBODIMENTS]

Hereinafter, preferred embodiments of the present invention will be described in detail with reference to the accompanying drawings. The terms or words used in the present specification and claims should not be interpreted as being limited to typical meanings or dictionary definitions, but should be interpreted as having meanings and concepts relevant to the technical scope of the present invention based on the rule according to which an inventor can appropriately define the concept of the terms to describe the best method he or she knows carrying out the invention. Therefore, embodiments described in the specification and the configurations shown in the drawings are not more than the most exemplary embodiments of the present invention and do not fully cover the scope of the present invention as defined by the claims. Accordingly, it should be understood that there may be various equivalents and modifications that can replace those when this application is filed.

In the drawings, the dimension of each of components or a specific portion constituting the component is exaggerated, omitted, or schematically illustrated for convenience in description and clarity. Thus, the dimension of each component does not entirely reflect an actual size. Moreover, detailed descriptions related to well-known functions or configurations may be omitted in order to avoid unnecessarily obscuring the subject matters of the present invention.

In addition, it will be understood that when an element such as a layer, film, region, or plate is referred to as being formed or disposed "on" or "above" another element, it should be interpreted as including not only a case where an element such as a layer, film, region, or plate is directly on the other element but also a case where intervening elements are present. In contrast, when an element such as a layer, film, region, or plate is referred to as being formed or disposed "directly on" another element, it may mean that other intervening elements are not present. Further, the word "on" or "above" means disposed on or below a reference portion, and does not necessarily mean being disposed on the upper end of the reference portion toward the opposite direction of gravity. Meanwhile, similarly to the case where it is described as being formed or disposed "on" or "above" another part, the case where it is described as being formed or disposed "below" or "under" another element will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

A cell unit according to an embodiment of the present invention will be described below.

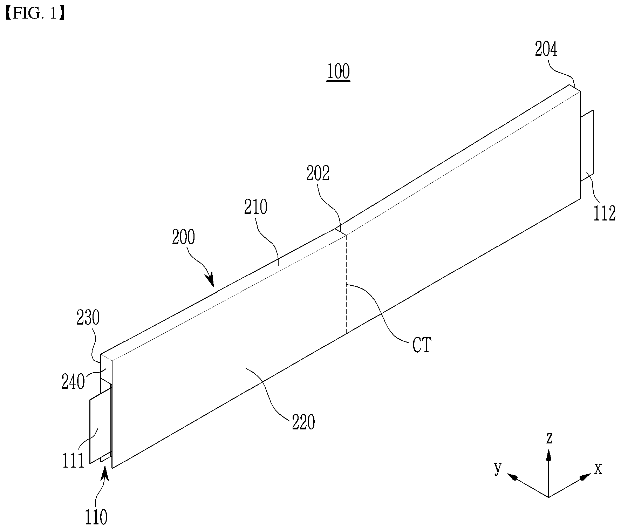

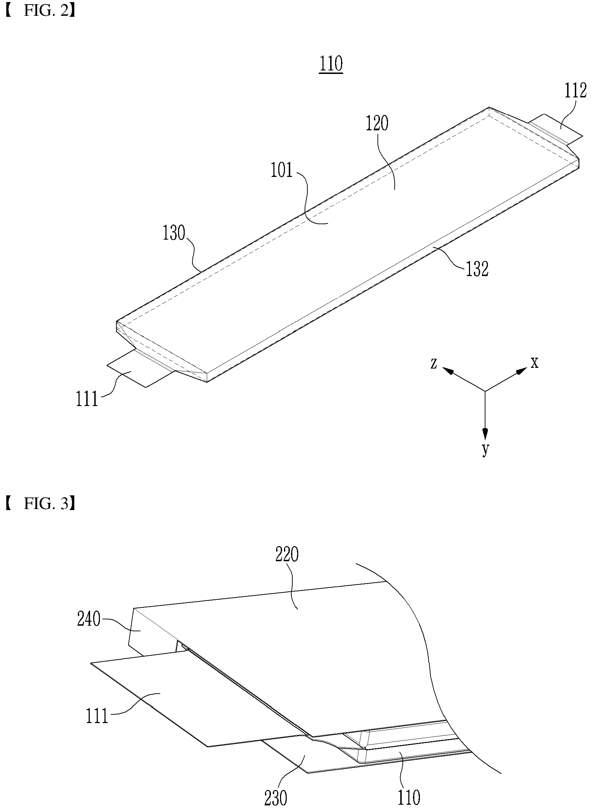

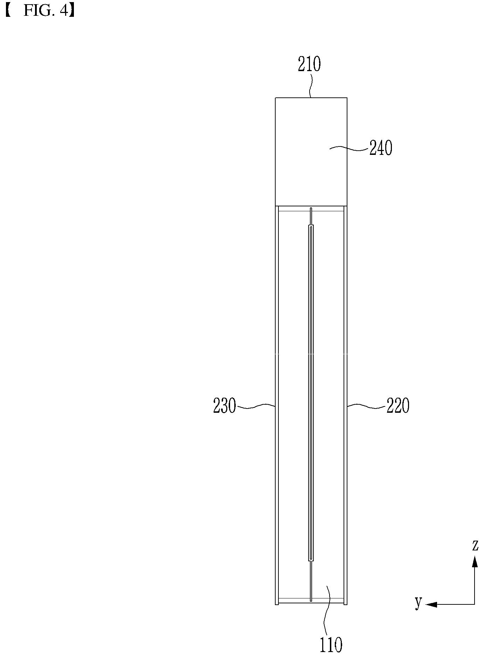

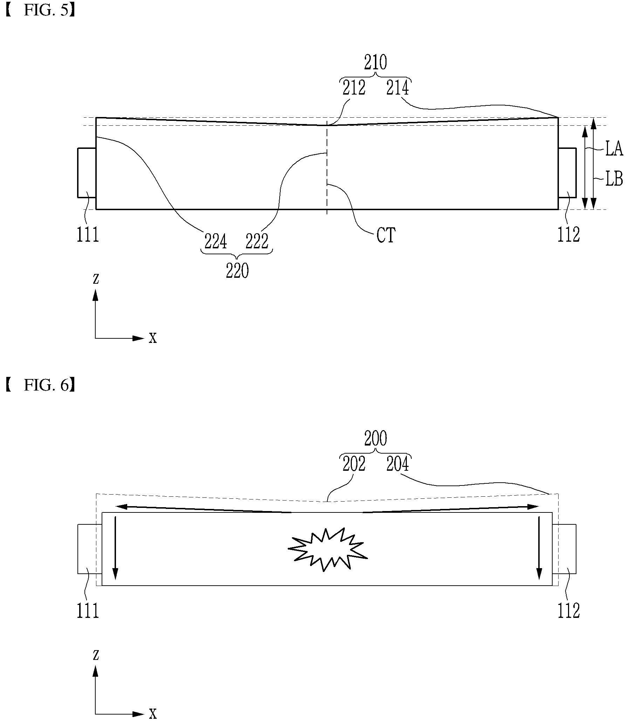

FIG. 1 is a perspective view of a cell unit according to an embodiment of the present invention. FIG. 2 is a perspective view of a battery cell according to an embodiment of the present invention. FIG. 3 is a diagram showing a part of the cell unit according to FIG. 1. FIG. 4 is a diagram showing a front surface or a rear surface of the cell unit according to FIG. 1. FIG. 5 is a diagram showing a side surface of the cell unit according to FIG. 1. FIG. 6 is a diagram showing a gas venting path when a thermal event occurs in a battery cell included in a cell unit according to the present embodiment.

Referring to FIGS. 1 to 6, the cell unit 100 according to an embodiment of the present invention may include a battery cell 110 housed in a state in which the electrode assembly is impregnated with the electrolyte, and a cell cover 200 covering a part of the battery cell 110. The cell unit 100 may be a minimum unit body that protects the battery cell 110.

Prior to description, the cell unit 100 may have a hexahedral shape having horizontal (length), vertical (width), and thickness, wherein the longitudinal direction may be the X axis, the widthwise direction may be the Z axis, and the thickness direction may be the Y axis. Further, when the cell unit 100 is arranged in standing upright as illustrated, the widthwise direction (Z-axis direction) may also be referred to as the height direction. The plurality of cell units 100 may be arranged successively along the thickness direction (Y-axis direction), and the thickness direction (Y-axis direction) may be referred to as a stacking direction of the cell unit 100.

Here, the two surfaces facing each other in the longitudinal direction (X-axis direction) of the cell unit 100 are referred to as a front surface and a rear surface, two surfaces facing each other in the thickness direction (Y-axis direction) of the cell unit 100 are referred to as side surfaces, and two surfaces facing each other in the widthwise direction (Z-axis direction) of the cell unit 100 may be referred to as an upper surface and a lower surface.

Referring to FIG. 2, the battery cell 110 of the present embodiment may be a pouch type that can maximize the number of stacked cells per unit area. A battery cell provided in a pouch type may be manufactured by housing an electrode assembly including a cathode, an anode, and a separator in a cell case of a laminate sheet and then heat-sealing a sealing part of the cell case. However, it is obvious that the battery cell does not necessarily have to be provided in a pouch type, and can be provided in a prismatic, cylindrical or any other various shapes under the level at which a storage capacity required by a device to be mounted in the future is achieved.

The battery cell 110 may include two electrode leads 111 and 112. Each of the electrode leads 111 and 112 may be located to protrude from one edge of the cell case 101 toward one direction. The electrode leads 111 and 112 may be located to protrude on one side of the edges of the battery cell 110 on which the sealing part 130 is formed. One ends of the electrode leads 111 and 112 may be located inside the battery cell 110 to be electrically connected to the cathode or the anode of the electrode assembly, and the other ends of the electrode leads 111 and 112 may be led out to the outside of the battery cell 110 to be electrically connected to another member such as a busbar.

The battery cell 110 may include a housing part 120 for housing the electrode assembly, and a sealing part 130 formed at the edge of the battery cell 110 to seal the electrode assembly. In the case of a pouch type battery cell, the battery cell may be manufactured by housing the electrode assembly in the cell case 101 and then sealing the edge of the cell case 101 located outside the electrode assembly. When the battery cell 110 is formed by housing the electrode assembly in the inner space formed by folding the cell case 101, and then sealing the edges of the opened three surfaces, the sealing part 130 may be formed on three of the four edges of the cell case 101, wherein the remaining one edge may be referred to as an unsealed part 132. However, unlike the one described above, it is also possible to heat-seal all four edges of the battery case in order to manufacture the battery cell 110, and in such a case, the sealing part 130 may be formed on all four edges of the battery cell 110.

As shown in FIG. 2, the battery cell 110 may have a hexahedral shape having horizontal (length), vertical (width), and thickness, wherein the longitudinal direction may be the X-axis, the widthwise direction may be the Z-axis, and the thickness direction may be the Y-axis. Based on the hexahedral shape, the battery cell 110 may be described as including two surfaces (surfaces on the XZ plane) corresponding to the housing part 120 and four surfaces located at the edges of the housing part 120. However, in the case of the pouch type battery cell 110, since the thickness value of the sealing part 130 formed by heat sealing is small, for convenience of explanation, the battery cell 110 will be described as having two surfaces corresponding to the housing part 120 and four edges located outside the housing part 120. At this time, when one surface of the battery cell 110 is disposed in upright along the Z-axis direction so that it is perpendicular to the ground, an edge on the +Z axis can be described as an upper side edge, and an edge on the -Z axis can be described as a lower side edge.

The battery cell 110 of this embodiment is covered by the cell cover 200 and provided in the form of a cell unit 100. The battery cell 110 is provided in the form of a cell unit 100, whereby a module case that protects the battery cell 110 from the external environment can be omitted, and the battery cell 110 may be directly seated and housed inside the pack case 300 without a module case. In the case of a pouch type battery cell, since the cell case is made of a soft material, it tends to be vulnerable to external impact and has low hardness. Therefore, only the battery cell itself may be hardly housed inside the pack case 300 without being housed in the module case. However, in the present embodiment, since the cell cover 200 supplements the stiffness of the battery cell 110, the battery cell 110 may be directly housed inside the pack case 300 and may be maintained in a stacked state. Further, since conventional fastening members such as a module case, a stacking frame, and bolts can be omitted by the cell cover 200, the manufacturing process can be simplified, the internal structure is simplified, and the weight and volume of the battery pack are reduced. and the energy density can be improved.

The stiffness of the battery cell 110 is supplemented by the cell cover 200 in this way, so that the handling of the battery cell 110 can be more facilitated in a battery pack assembling process. More specifically, the cell cover 200 coupled with the battery cell 110 can gripped in the process of housing the battery cell 110 in a pack case 300, thereby preventing the battery cell 110 from being damaged, and performing the assembling process more easily. Moreover, the swelling control of the battery cell 110 and the design of a gas venting path can be easily performed.

The cell cover 200 can be for covering at least a part of the outer surface of the battery cell 110. The cell cover 200 can cover a part of the battery cell 110 and expose the other portion, thereby improving the cooling efficiency and guiding the gas generated from the battery cell 110 in a predetermined direction.

The cell cover 200 supplements the stiffness of the battery cell 110 so that the battery cell 110 can maintain an upright state. The cell cover 200 can cover at least a part of the battery cell 110 to support the battery cell 110, and can be disposed in upright in one direction to stably maintain the stacked state of the battery cells 110. More specifically, since the second surface 220 and the third surface 230 of the cell cover 200 support one surface of the battery cell 110, thereby maintaining the upright state of the battery cell 110. Further, the lower edge of the cell cover 200 can be seated on the bottom surface 312 of the pack case 300, so that the cell cover 200 can stand on its own, and the standing state of the battery cell 110 inside the cell cover 200 can be maintained.

The cell cover 200 can cover two surfaces of the battery cell 110 and one edge between the two surfaces. Alternatively, it can be described as covering two surfaces of the hexahedral battery cell 110 facing each other and one surface sharing an edge with the two surfaces.

The cell cover 200 may include a second surface 220 and a third surface 230 that are parallel and spaced apart from each other, and a first surface 210 extending between the second surface 220 and the third surface 230. One edge of the first surface 210 may be connected to one edge of the second surface 220, and another edge of the first surface 210 may be connected to one edge of the third surface 230. Alternatively, the second surface 220 may be described as extending from one edge of the first surface 210 in the first direction, and the third surface 230 may be described as extending from the other edge of the first surface 210 in the first direction. At this time, the first direction is a direction substantially perpendicular to the first surface 210, which is indicated as a -Z axis direction in the drawing. In this manner, the cross section of the cell cover 200 may be n-shaped, wherein the cross section may refer to a cross section in the longitudinal direction (X-axis direction) of the cell cover 200.

The cell cover 200 may cover one surface of the battery cell 110. The second surface 220 and the third surface 230 of the cell cover 200 may cover both side surfaces of the battery cell 110. The second surface 220 and the third surface 230 of the cell cover 200 may be located in parallel to one surface of the battery cell 110. More specifically, as shown in FIG. 4, the second surface 220 may cover one surface on the right side (-Y axis) of the battery cell 110 from the right side. The third surface 230 may cover one surface on the left side (+Y axis) of the battery cell 110 from the left side.

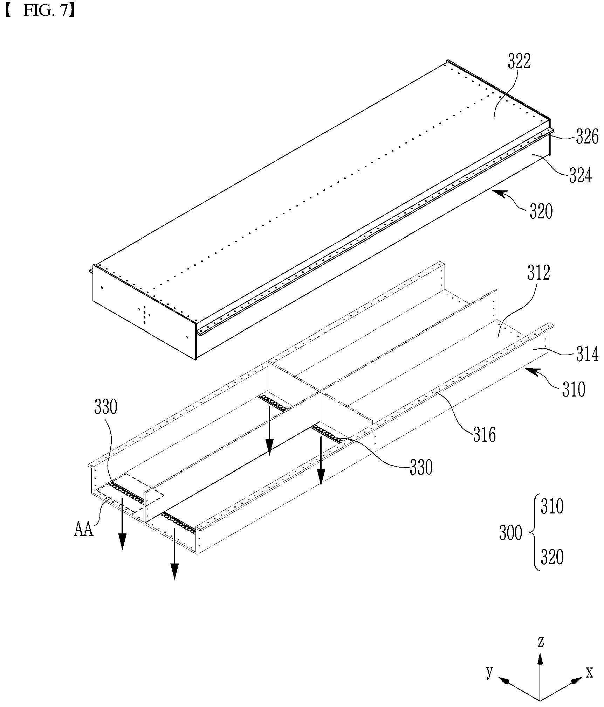

The second surface 220 and the third surface 230 of the cell cover 200 separate the battery cell 110 from the adjacent battery cell 110 to thereby shut off the gas generated in one battery cell 110 from moving to an adjacent battery cell 110. Further, the cell cover 200 is in contact with or is disposed close to one surface of the battery cell 110, so that heat generated in the battery cell 110 can be transferred to the cell cover 200, thereby promoting heat dissipation of the battery cell 110. Furthermore, when the lower side edge of the cell cover 200 is disposed to be in contact with the pack case 300 (see FIG. 7) that houses the cell unit 100, a heat transfer path can be formed to move to the battery cell 110, the cell cover 200, and the pack case 300, thereby improving the overall cooling efficiency of the battery pack.

The cell cover 200 may cover one edge of the battery cell 110. The first surface 210 of the cell cover 200 may cover one edge of the battery cell 110. The cell cover 200 can cover the upper side edge of the battery cells 110 arranged vertically so that one edge corresponds to the bottom surface 312 (see FIG. 7) of the pack case 300. The first surface 210 of the cell cover 200 may correspond to the upper side edge of the battery cell 110 in an upright state.

The cell cover 200 may not cover the lower side edge corresponding to the bottom surface 312 of the pack case 300 in the vertically arranged battery cell 110, and a lower edge of the battery cell 110 may be exposed toward the bottom surface 312. Thereby, the battery cell 110 is contact with or disposed close to the bottom surface 312 of the pack case 300, so that heat generated in the battery cell 110 can be quickly discharged to the bottom surface 312 of the pack case 300. At this time, when the cooling member is located on the bottom surface 312 of the pack case 300, this heat dissipation effect can be further improved.

The cell cover 200 may include a fourth surface 240 extending between the first surface 210, the second surface 220 and the third surface 230. The fourth surface 240 may be described as extending in the first direction from the edge of the first surface 210 in the longitudinal direction (X-axis direction). The fourth surface 240 may be provided in two numbers, and the two fourth surfaces 240 may be formed at both ends of the cell cover 200 in the longitudinal direction (X-axis direction). The fourth surface 240 may be perpendicular to the second surface 220 and the third surface 230. The fourth surface 240 may form an acute angle with the first surface 210 depending on the shape of the first surface 210.

On the other hand, the end part of the cell cover 200 in the longitudinal direction (X-axis direction) may be in an open state, and the electrode leads 111 and 112 of the battery cell 110 may be disposed at end parts of the cell cover 200 in the longitudinal direction (X-axis direction). Here, the fourth surface 240 may be formed so as to partially cover the open end part. The fourth surface 240 is formed on the cell cover 200, so that gas generated inside the battery cell 110 can be prevented from moving along the longitudinal direction (X-axis direction) of the cell cover 200. The fourth surface 240 can prevent the gas in the battery cell 110 from moving toward the electrode leads 111 and 112. The fourth surface 240 may also be referred to as a 'shutting-off part'.

Conventionally, in the event of ignition in the battery cell 110, when gas, sparks and the like move in the direction of the electrode leads 111 and 112, it may further damage the electrode leads 111 and 112 of the adjacent battery cell 110, the busbar of the battery pack, and the like, which cause a problem that a thermal runaway phenomenon is promoted. However, in the cell unit 100 of the present embodiment, one surface of the cell cover 200 where the electrode leads 111 and 112 are located is partially covered by the fourth surface 240, so that movement of gas and spark to the electrode leads 111 and 112 can be minimized.

Referring to FIG. 5, the cell cover 200 has a shape in which the upper part is inclined. As the cell cover 200 is closer to the end in the longitudinal direction (X-axis direction), it may have a shape in which the value of widthwise length is larger. As the cell cover 200 is closer to the end part in the longitudinal direction (X-axis direction), the height value can be larger. Based on the front surface (XZ plane), the cell cover 200 may have an 'M' shape as a whole.

The cell cover 200 includes a central part 202 and an edge part 204. The cell cover 200 has a shape which is inclined upward from the central part 202 toward the edge part 204. The central part 202 may be a portion including the center CT in the longitudinal direction (X-axis direction) of the cell cover 200, and the edge part 204 may be a portion including an edge in the longitudinal direction (X-axis direction) of the cell cover 200.

Meanwhile, as will be described later, the central part 202 of the cell cover 200 includes a first central part 212 of the first surface 210, a second central part 222 of the second surface 220, and a third central part (not shown) of the third surface 230. The edge part 204 of the cell cover 200 may include a first edge part 214 of the first surface 210, a second edge part 224 of the second surface 220, and a third edge part (not shown) of the surface 230. As the second surface 220 and the third surface 230 are closer to the ends in the longitudinal direction (X-axis direction), they can be provided in a shape in which the width is larger. Here, the longitudinal direction of the second surface 220 and the third surface 230 may correspond to the X-axis direction, and the widthwise direction may correspond to the Z-axis direction.

More specifically, the second surface 220 may include a second central part 222 and a second edge part 224. The second central part 222 may be a portion including the center CT in the longitudinal direction (X-axis direction) of the second surface 220, and the second edge part 224 may be a portion including an edge in the longitudinal direction (X-axis direction) of the second surface 220.

On the second surface 220, the width LA of the second central part 222 may be smaller than the width LB of the second edge part 224. The widthwise length LA of the second central part 222 may be a minimum value of the widthwise length of the second surface 220, and the widthwise length LB of the second edge part 224 may be the maximum value of the widthwise length of the second surface 220. The second surface 220 may have a relatively small widthwise length value as it is closer to the second central part 222, and may have a relatively large widthwise length value as it is closer to the second edge part 224.

The upper side edge of the second surface 220 may be formed in a shape which is inclined corresponding to the change in the widthwise length value. The second surface 220 has an 'M' shape as a whole. More specifically, the upper edge of the second surface 220 has a shape which is inclined upward toward the end part in the longitudinal direction (X-axis direction) of the second surface 220. An upper side edge of the second surface 220 may have a shape which is inclined upward from the second central part 222 toward the second edge part 224. Here, the upper side edge may be an edge located on the +Z axis of the second surface 220.

The contents described above for the second surface 220 can also be applied to the third surface 230.

On the other hand, the upper side edges of the second surface 220 and the third surface 230 have an inclined shape, so that the first surface 210 connected to the second surface 220 and the third surface 230 can also have an inclined shape. More specifically, the first surface 210 may include a first central part 212 and a first edge part 214. The first central part 212 may be a portion including the center CT in the longitudinal direction (X-axis direction) of the first surface 210, and the first edge part 214 may be a portion including an edge in the longitudinal direction (X-axis direction) of the first surface 210.

The first central part 212 may correspond to the second central part 222. The positional value of the first central part 212 relative to the ground, that is, the widthwise length value, may correspond to the widthwise length value of the second central part 222. The first edge part 214 may correspond to the second edge part 224. A height value of the first edge part 214 relative to the ground may correspond to a widthwise length value of the second edge part 224.

The first surface 210 may be formed so as to be inclined at an angle with the ground. At this time, the ground may be described as the bottom surface 312 of the pack case 300 or the bottom surface 412 of the module case 400. On the first surface 210, the first central part 212 may be located at a position relatively lower than the first edge part 214. On the first surface 210, the first edge part 214 may be located at a position relatively higher than the first central part 212. The first surface 210 may have a shape which is inclined upward toward the end part in the longitudinal direction (X-axis direction). The first surface 210 may have a shape which is inclined upward from the central part toward the edge part. A cross section of the first surface 210 in the widthwise direction (Y-axis direction) may have a shape which is inclined upward from the central part toward the edge part. A cross section (XZ plane) in the widthwise direction (Y-axis direction) of the first surface 210 may have a 'V' shape.

Referring to FIG. 6, the cell cover 200 of the present embodiment has a shape in which the upper part is inclined, and a gas venting direction is restricted when a thermal event occurs, thereby preventing cascading thermal runaway. Here, arrows in FIG. 6 may exemplify a venting direction of gas.

Since the cell cover 200 has an inclined shape, the volume inside the cell cover 200 can be increased when compared with a conventional cell cover structure in which the upper part is configured to be flat, and venting gas or flame flow can be guided along the cell cover 200 that is configured to be inclined upward during thermal runaway of the battery cell 110.

More specifically, the central part 202 of the cell cover 200 may have a relatively small volume, and the edge part 204 may have a relatively large volume. When venting gas is generated inside the cell cover 200 due to a thermal runaway phenomenon, the venting gas may be moved to the edge part 204 having have a relatively large volume in order to eliminate the elevated internal pressure of the cell cover 200. Meanwhile, the fourth surface 240 can be located at the edge part 204 to thereby prevent the venting gas from further moving along the longitudinal direction (X-axis direction) of the cell cover 200. The gas can convert its moving direction by colliding with the fourth surface 240, and thereby, move toward the lower side (-Z axis direction) of the cell cover 200. As will be described later, a venting hole may be provided on the lower surface of the pack case 300 to which the cell unit 100 is mounted, and such venting holes may be located to correspond to the gas discharge direction induced by the cell cover 200, whereby venting gas or flame can be prevented from being randomly discharged from the cell cover.

The cell cover 200 can be made of a material having a high melting point so that it does not melt even during thermal runaway inside the battery pack. Further, the cell cover 200 can be made of a material having a mechanical strength greater than a predetermined range so as to stably support the battery cell 110, so that the battery cell 110 can be protected from external impacts and the like. Examples of materials used for the cell cover 200 include steel, stainless steel (SUS), and the like.

The cell cover 200 may be coupled to cover the battery cell 110 on the upper side of the battery cell 110. Here, a thermally conductive resin or the like having adhesive properties may be provided between the cell cover 200 and the battery cell 110, but this is not necessarily the case, and may allow any other material not to interpose between the cell cover 200 and the battery cell 110. This can be for minimizing the volume of the cell cover 200 and the battery cells 110 to maximize the number of battery cells 110 housed inside the pack case 300, thereby maximizing the energy density of the battery pack.

In the present embodiment, the cell cover 200 has been described as individually covering one battery cell 110, but this is not necessarily the case, and the cell cover 200 can be designed so as to include two or three or more battery cells 110 according to a designer's intention.

In the present embodiment, the cell cover 200 has been described as being provided for all battery cells 110, but this is not necessarily the case, and the cell cover 200 may be provided only on some of the plurality of battery cells 110.

The cell cover 200 of the present embodiment has been described as having an n-shape, but it can be configured in other shapes as long as it is possible to achieve the purpose of preventing gas or the like from transferring to the electrode leads 111 and 112 and other electrical members. For example, the cell cover may be formed in a '▭' shape, a 'U' shape, an 'O' shape, an 'L' shape, and the like.

Meanwhile, although not specifically illustrated, the cell cover 200 of the present embodiment may be provided with a clamping member. The clamping member can clamp between the different end parts of the cell covers 200 to prevent them from being space apart or deformed. For example, the clamping member can be provided at the lower end of the cell cover 200 where the lower edge of the battery cell 110 is located, and prevent the second surface 220 and the third surface 230 from being spaced apart, thereby being able to maintain the housing state of the battery cell 110. As a specific example, the clamping member may be a tape. As another specific example, the clamping member may be a metal material having elasticity.

On the other hand, although not specifically illustrated, a busbar frame can be coupled to an end part of the cell cover 200 in the longitudinal direction (X-axis direction). The end part of the cell cover 200 in the longitudinal direction (X-axis direction) may be in an open state, and the open end part may be covered by a busbar frame. The busbar frame may allow the battery cells 110 covered by the cell covers 200 to be electrically connected to external conductive members or adjacent battery cells 110. The busbar frame may be configured to support the electrode leads 111 and 112 of at least one battery cell 110 and electrically connect the electrode leads 111 and 112 of the battery cell 110 with the electrode leads 111 and 112 of adjacent battery cells 110. The busbar frame may include a busbar made of an electrically conductive material such as copper and a busbar housing made of a plastic material such as PC.

Next, a battery pack including the cell unit described above will be described.

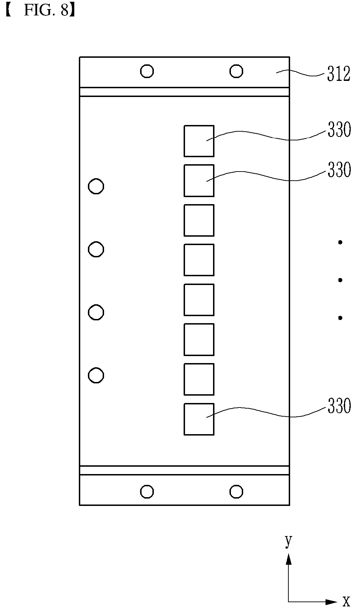

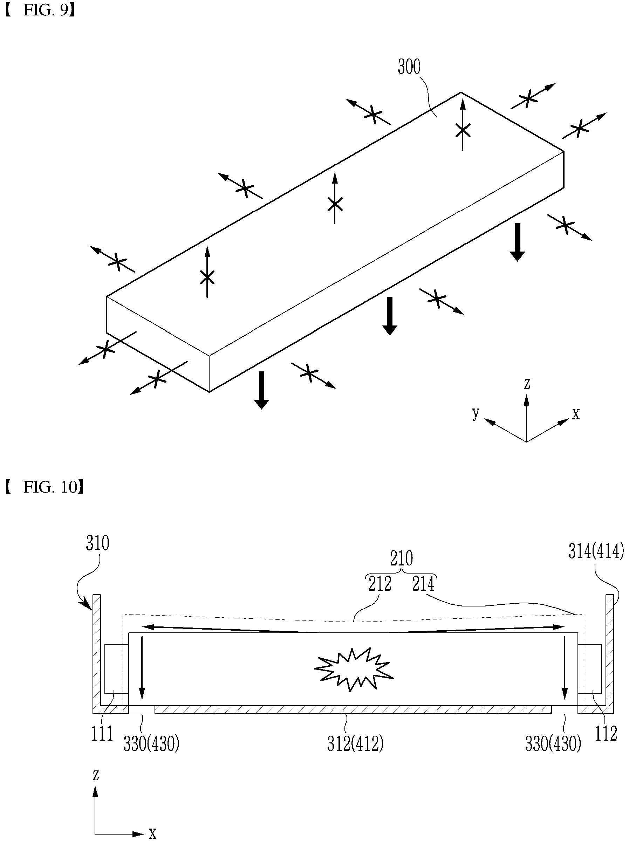

FIG. 7 is a diagram showing a pack case of a battery pack according to the present embodiment. FIG. 8 is an enlarged view of a section AA of FIG. 7. FIGS. 9 and 10 are diagrams which schematically illustrate directional venting of a battery pack according to an embodiment of the present invention. Here, arrows in FIG. 10 may exemplify a venting direction of gas.

The cell unit 100 of the present embodiment may be housed inside the pack case 300 and provided in the form of a battery pack. The cell unit 100 may be housed inside the pack case 300, thereby being protected from external environments. The cell unit 100 may be provided in plural numbers, and the plurality of cell units 100 may be stacked in one direction and housed in the pack case 300. The cell units 100 may be arranged successively such that one surface thereof and one surface of an adjacent cell unit 100 are parallel to each other. The cell units 100 may be arranged successively such that the side surfaces thereof and the side surfaces of adjacent cell units 100 are parallel to each other. One surface of the cell unit 100 may be perpendicular to the bottom surface 312 of the pack case 300. The cell unit 100 may be arranged so that the lower surface corresponds to the bottom surface 312 of the pack case 300.

Meanwhile, the plurality of battery cells 110 may be arranged along the thickness direction (Y-axis direction) or in the left-right direction of the battery cells 110. Further, the plurality of battery cells 110 may be arranged along the longitudinal direction (X-axis direction) or the front-back direction of the battery cells 110. In this manner, the plurality of battery cells 110 are stacked along the thickness direction (Y-axis direction) to form a cell assembly. Such cell assemblies may be arranged in two rows and two columns along the thickness direction (Y-axis direction) and longitudinal direction (X-axis direction) and housed in the pack case 300. However, since this is merely one example, the cell assemblies may be arranged successively along the thickness direction (Y-axis direction), or arranged successively along the longitudinal direction (X-axis direction).

As shown in FIG. 7, the pack case 300 may include a lower case 310 and an upper case 320. The lower case 310 may include a bottom surface 312 and a lower side surface 314 extending vertically from one corner of the bottom surface 312, and a plurality of battery cells 110 can be housed in the internal space formed thereby. Further, the upper case 320 may include an upper surface 322 and an upper side surface 324 extending vertically from one corner of the upper surface 322. The lower side surface 314 may overlap at least a part of the upper side surface 324. Here, the upper side surface 324 may be formed with an upper coupling part 326 extending vertically from one surface of the upper side surface 324, and the lower side surface 314 may be formed with a lower coupling part 316 extending vertically from one surface of the lower side surface 314. By coupling the upper coupling part 326 and the lower coupling part 316 the lower case 310 and the upper case 320 can be coupled.

However, the structure of the pack case 300 described above is merely one example, and the pack case 300 of this embodiment may be provided in a structure different from that described above. For example, the pack case 300 may include a bottom surface, a side surface extending vertically from one corner of the bottom surface, and an upper surface parallel to the bottom surface and coupled to each edge of the lower side surface. Here, the bottom surface, the lower side surface, and the upper surface may be integrally formed, and this configuration may be referred to as a mono frame structure. Alternatively, the bottom surface, the lower side surface, and the upper surface may be coupled by a welding process. In this manner, the pack case 300 of the present embodiment is not limited to the illustrated one, and can be variously modified or changed as long as if it is in a shape capable of housing the cell unit 100 therein and protecting the cell unit 100.

Meanwhile, an adhesive may be provided between the battery cell 110 and the pack case 300 so that the battery cell 110 housed in the cell cover 200 can be stably disposed in the pack case 300. More specifically, an adhesive may be interposed between one edge of the battery cell 110 and the bottom surface 312 of the pack case 300. At this time, one edge of the battery cell 110 provided with the adhesive may be the unsealed part 132. Examples of the adhesive that can be used include a thermally conductive resin, TIM, and the like, and a known material can be applied as long as it is a material having thermal conductivity or adhesiveness. Further, such an adhesive may be provided between the cell cover 200 and the pack case 300 or between the battery cell 110 and the cell cover 200 in order to make the structure of the battery pack rigid.

Referring to FIG. 8, the bottom surface 312 of the pack case 300 of the present embodiment may be formed with a venting hole 330 for discharging gas generated in the battery cell 110 to the outside of the pack case 300. The venting hole 330 can be for communicating the inside and outside of the pack case 300.

The cell cover 200 covering the outer surface of the battery cell 110 may be in a state where the lower surface is opened, and the cell cover 200 may not cover the lower edge of the battery cell 110. Thereby, the battery cell 110 may be exposed to the outside of the cell cover 200 to face the bottom surface 312 of the pack case 300.

As shown in FIGS. 6 and 10, the gas generated in the battery cell 110 is restricted in its movement by the cell cover 200 and can be concentrated at the lower edge of the battery cell 110. Venting gas inside the cell cover 200 concentrated at the lower part may be discharged to the outside through the venting hole 330 formed in the bottom surface 312 of the pack case 300.

The venting holes 330 may correspond to the plurality of cell units 100, respectively. The venting holes 330 may be provided in plural numbers, and at least one venting hole 330 may correspond to each cell unit 100. Alternatively, one venting hole 330 may correspond to a plurality of cell units 100.

The plurality of venting holes 330 may be located side by side along the stacking direction of the cell unit 100. When the cell units 100 are arranged successively along the thickness direction (Y-axis direction) as described above, the plurality of venting holes 330 may be arranged successively along the thickness direction (Y-axis direction) of the cell unit 100.

The venting hole 330 may correspond to an end of the cell unit 100 in the longitudinal direction (X-axis direction). The venting holes 330 may be disposed in two rows or two columns to correspond to end parts of the cell unit 100 in the longitudinal direction (X-axis direction), respectively. The venting hole 330 may be formed successively along two straight lines parallel to each other on the bottom surface 312 of the inner space in which the plurality of cell units 100 are housed.

Referring to FIGS. 9 and 10, the effect of the present invention due to the cell cover 200 can be explained. More specifically, the gas generated in the battery cell 110 by the thermal event is restricted in its movement by the cell cover 200 and concentrated on the bottom surface 312 of the pack case 300, and can be discharged by the venting hole 330 formed in the bottom surface 312. More specifically, the gas generated in the battery cell 110 in the thickness direction (Y-axis direction) may be restricted in its movement by the second surface 220 and the third surface 230 of the cell cover 200. Further, the gas in the longitudinal direction (X-axis direction) may be restricted in its movement by the fourth surface 240 of the cell cover 200. In addition, since the upward (+Z axis) movement is also restricted by the first surface 210 of the cell cover 200, the gas can be concentrated in the lower side (-Z axis) and thus can be discharged by the venting hole 330 provided in the pack case 300. Moreover, since the cell cover 200 has a shape in which the upper part is inclined, and thus, the internal gas may be concentrated at the end part of the cell cover 200 in the longitudinal direction (X-axis direction). The venting hole 330 is located to correspond to the end part of the cell cover 200 in the longitudinal direction (X-axis direction), so that internal gas can be quickly discharged through the venting hole 330.

Meanwhile, in the above description, a module-less structure in which a cell assembly containing a plurality of battery cells 110 is not sealed by a module case is mainly explained. Here, the module-less structure may refer to a cell to pack structure in which a cell structure is directly coupled to a pack structure without a module case.

However, unlike the one described above, the cell units 100 of the present embodiment may be mounted in a battery pack while being housed inside a separate case.

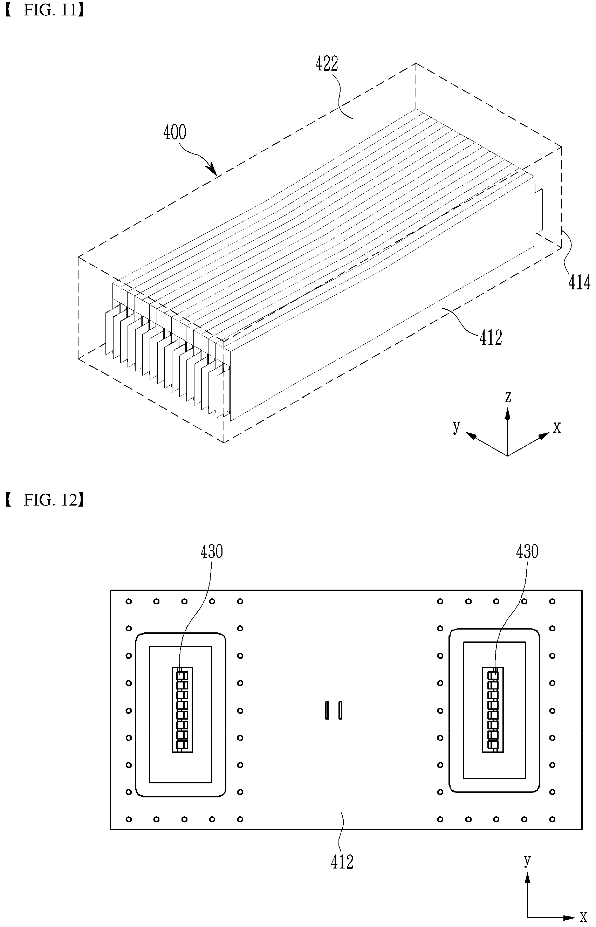

FIG. 11 is a diagram showing a state in which cases are provided for a plurality of cell units according to an embodiment of the present invention. FIG. 12 is an enlarged view of the lower surface of the case according to FIG. 11.

Referring to FIGS. 11 and 12, the cell unit 100 of the present embodiment may be housed in the module case 400 and mounted in a battery pack in a modularized state.

The module case 400 may be provided in various forms. In one example, the structure of the module case 400 may be a mono frame structure. Here, the mono frame may be in the form of a metal plate in which the upper surface 422, the bottom surface 412, and both side surfaces 414 are integrated. The mono frame can be made by extrusion molding. In another example, the structure of the module case 400 may be a structure in which a U-shaped frame and an upper plate are coupled. In the case of a structure in which a U-shaped frame and an upper plate are coupled, the structure of the module case 400 may be formed by coupling the upper surface 422 with the upper side of the U-shaped frames, which are metal plates in which the bottom surface 412 and both side surfaces 414 are coupled or integrated, wherein each member may be manufactured by press molding. Further, the structure of the module case 400 may be provided in an L-shaped frame structure in addition to a mono frame or a U-shaped frame, and may be provided in various structures not described in the above examples.

The battery cell 110 located inside the module case 400 may be in the form of a cell unit 100 protected by the cell cover 200. At this time, the cell cover 200 included in the cell unit 100 may be in a state where the lower surface is opened, and may not cover the lower edge of the battery cell 110. Thereby, the battery cell 110 may be exposed to the outside of the cell cover 200 to face the bottom surface 412 of the module case 400. A venting hole 430 may be formed in the bottom surface 412 to discharge gas generated in the battery cell 110 to the outside of the module case 400.

As shown in FIG. 10, the internal gas of the cell unit 100 may be concentrated at the end part in the longitudinal direction (X-axis direction) due to the inclined shape of the cell unit 100, and may be moved downward. The venting hole 430 may be located to correspond to an end part of the cell unit 100 in the longitudinal direction (X-axis direction), so that the venting hole 430 can easily correspond to the gas moved downward, and can quickly discharge the gas.

The venting hole 430 of the module case 400 is similar in terms of purpose and use to the venting hole 330 of the pack case 300. Thus, for more details regarding the venting hole 430 of the module case 400, refer to the explanations of the 'venting hole 330' of FIGS. 7 to 10 mentioned above.

On the other hand, FIG. 11 shows that the electrode leads 111 and 112 of the battery cell 110 are exposed to the outside of the cell cover 200 and are housed in the module case 400 of the battery cell 110 in this state. However, this is only a simplified drawing, and when the actual battery cell 110 is housed in the module case 400, the battery cells 110 housed in each cell unit 100 may be electrically connected to adjacent battery cells 110 and/or busbars through a busbar frame or the like.

On the other hand, the battery pack and the battery module are explained individually in the above description, but both the battery pack and the battery module include the cell unit 100 including the battery cell 110, and may refer to the smallest unit of sale or use. Therefore, the battery pack and the battery module in this specification can be interchangeably referred to.

In addition, the above-described pack case 300 and module case 400 protect the cell unit 100 from e external environments, and are used in the same way, and can be collectively called a case.

Meanwhile, the battery module including the battery pack and battery pack can be applied to various devices. Such a device may be not only a vehicle means such as an electric bicycle, an electric vehicle, or a hybrid vehicle, but also ESS (Energy Storage System). Further, the present disclosure is not limited thereto, and can be applied to various devices capable of using the battery module including the battery pack and battery pack, which also falls within the scope of the present invention.

Although the invention has been described in detail above with reference to preferred embodiments thereof, the scope of the present disclosure is not limited thereto, and various modifications and improvements can be made by those skilled in the art using the basic concepts of the present disclosure as defined in the appended claims, which also falls within the scope of the present disclosure.

### [Description of Reference Numerals]

100: cell unit
110: battery cell
200: cell cover
300: pack case
312: bottom surface
330: venting hole
400: module case
412: bottom surface
430: venting hole

## Claims

1. A battery pack comprising:
a plurality of cell units (100) arranged side by side in one direction, and
a pack case (300) which houses the plurality of the cell units (100),
wherein each of the cell units (100) includes at least one battery cell (110) and a cell cover (200) covering a part of the battery cell (110), and
wherein the cell cover (200) has a shape in which the upper part is inclined,
the cell cover (200) including a central part (202) and two edge parts (204) on both sides of the central part,
**characterized in that** the cell cover (200) has a shape which is inclined upward from the central part (202) toward both edge parts (204) which are end parts in the longitudinal direction (X).

2. The battery pack of claim 1, wherein:
the cell cover (200) is formed so that a widthwise length value of the end parts is greater than the widthwise length value of the central part (202, 212, 222).

3. The battery pack of claim 1, wherein:
the battery cell (110) is vertically disposed so that one edge corresponds to the bottom surface (312, 412) of the pack case (300), and
the cell cover (200) covers an upper edge of the vertically disposed battery cell (110), and its lower surface is opened so that it does not cover the lower edge of the battery cell (110).

4. The battery pack of claim 1, wherein:
the cell cover (200) includes a second surface (220) and a third surface (230) disposed in parallel to one surface of the battery cell (110), and a first surface (210) extending between the second surface (220) and the third surface (230), and
a cross section of the cell cover (200) has an n-shape.

5. The battery pack of claim 4, wherein:
the second surface (220) includes a second central part (222) and a second edge part (224), and
a widthwise length value of the second central part (222) is smaller than a widthwise length value of the second edge part (224).

6. The battery pack of claim 4, wherein:
an upper side edge of the second surface (220) has a shape which is inclined upward toward an end part of the second surface (220) in the longitudinal direction (X).

7. The battery pack of claim 4, wherein:
a cross section of the first surface (210) in the widthwise direction has a shape which is inclined upward toward the end part in the longitudinal direction (X).

8. The battery pack of claim 4, wherein:
the cell cover (200) includes a fourth surface (240) extending between the first surface (210), the second surface (220), and the third surface (230).

9. The battery pack of claim 8, wherein:
the fourth surface (240) partially covers an open end part of the longitudinal direction (X) of the cell cover (200).

10. The battery pack of claim 1, wherein:
the bottom surface (312, 412) of the pack case (300) is formed with a venting hole (330, 430) communicating with the outside.

11. The battery pack of claim 10, wherein:
the venting hole (330, 430) is located at a position corresponding to an end part of the cell unit (100) in the longitudinal direction (X).

12. The battery pack of claim 10, wherein:
the vent holes (330, 430) are provided in plural numbers, and the plurality of venting holes (330, 430) are located side by side along a straight line.

13. The battery pack of claim 1, wherein:
the plurality of cell units (100) are housed in the pack case (300) while being housed in a separate case.

14. A device comprising the battery pack of claim 1.

## Patentansprüche

1. Batteriepack, umfassend:
eine Mehrzahl von Zelleinheiten (100), welche in einer Richtung nebeneinander angeordnet sind, und
ein Packgehäuse (300), welches die Mehrzahl der Zelleinheiten (100) aufnimmt,
wobei jede der Zelleinheiten (100) wenigstens eine Batteriezelle (110) und eine Zellenabdeckung (200) umfasst, welche einen Teil der Batteriezelle (110) abdeckt, und
wobei die Zellenabdeckung (200) eine Form aufweist, bei welcher der obere Teil geneigt ist,
wobei die Zellenabdeckung (200) einen Mittelteil (202) und zwei Randteile (204) auf beiden Seiten des Mittelteils umfasst,
**dadurch gekennzeichnet, dass** die Zellenabdeckung (200) eine Form aufweist, welche von dem Mittelteil (202) zu beiden Randteilen (204) hin nach oben geneigt ist, welche Endteile in der longitudinalen Richtung (X) sind.

2. Batteriepack nach Anspruch 1, wobei:
die Zellenabdeckung (200) derart gebildet ist, dass ein Längenwert in Breitenrichtung der Endteile größer ist als der Längenwert in Breitenrichtung des Mittelteils (202, 212, 222).

3. Batteriepack nach Anspruch 1, wobei:
die Batteriezelle (110) vertikal angeordnet ist, so dass ein Rand der unteren Fläche (312, 412) des Packgehäuses (300) entspricht, und
die Zellenabdeckung (200) einen oberen Rand der vertikal angeordneten Batteriezelle (110) abdeckt und deren untere Fläche offen ist, so dass sie den unteren Rand der Batteriezelle (110) nicht abdeckt.

4. Batteriepack nach Anspruch 1, wobei:
die Zellenabdeckung (200) eine zweite Fläche (220) und eine dritte Fläche (230), welche parallel zu einer Fläche der Batteriezelle (110) angeordnet sind, und eine erste Fläche (210) umfasst, welche sich zwischen der zweiten Fläche (220) und der dritten Fläche (230) erstreckt, und
ein Querschnitt der Zellenabdeckung (200) eine n-Form aufweist.

5. Batteriepack nach Anspruch 4, wobei:
die zweite Fläche (220) einen zweiten Mittelteil (222) und einen zweiten Randteil (224) umfasst und
ein Längenwert in Breitenrichtung des zweiten Mittelteils (222) kleiner ist als ein Längenwert in Breitenrichtung des zweiten Randteils (224).

6. Batteriepack nach Anspruch 4, wobei:
ein oberer Seitenrand der zweiten Fläche (220) eine Form aufweist, welche in der longitudinalen Richtung (X) zu einem Endteil der zweiten Fläche (220) hin nach oben geneigt ist.

7. Batteriepack nach Anspruch 4, wobei:
ein Querschnitt der ersten Fläche (210) in der Breitenrichtung eine Form aufweist, welche in der longitudinalen Richtung (X) zu dem Endteil hin nach oben geneigt ist.

8. Batteriepack nach Anspruch 4, wobei:
die Zellenabdeckung (200) eine vierte Fläche (240) umfasst, welche sich zwischen der ersten Fläche (210), der zweiten Fläche (220) und der dritten Fläche (230) erstreckt.

9. Batteriepack nach Anspruch 8, wobei:
die vierte Fläche (240) einen offenen Endteil der longitudinalen Richtung (X) der Zellenabdeckung (200) teilweise abdeckt.

10. Batteriepack nach Anspruch 1, wobei:
die untere Fläche (312, 412) des Packgehäuses (300) mit einem Entlüftungsloch (330, 430) gebildet ist, welches mit dem Äußeren in Verbindung steht.

11. Batteriepack nach Anspruch 10, wobei:
das Entlüftungsloch (330, 430) an einer Position angeordnet ist, welche einem Endteil der Zelleinheit (100) in der longitudinalen Richtung (X) entspricht.

12. Batteriepack nach Anspruch 10, wobei:
die Entlüftungslöcher (330, 430) in einer Mehrzahl bereitgestellt sind und die Mehrzahl von Entlüftungslöchern (330, 430) entlang einer geraden Linie nebeneinander angeordnet ist.

13. Batteriepack nach Anspruch 1, wobei:
die Mehrzahl von Zelleinheiten (100) in dem Packgehäuse (300) aufgenommen ist, während sie in einem separaten Gehäuse aufgenommen ist.

14. Vorrichtung, umfassend den Batteriepack nach Anspruch 1.

## Revendications

1. Bloc-batterie comprenant :
une pluralité d'unités de cellule (100) agencées côte à côte dans une direction, et
un boîtier de bloc (300) qui reçoit la pluralité des unités de cellule (100),
dans lequel chacune des unités de cellule (100) comporte au moins une cellule de batterie (110) et un couvercle de cellule (200) recouvrant une partie de la cellule de batterie (110), et
dans lequel le couvercle de cellule (200) a une forme dans laquelle la partie supérieure est inclinée, le couvercle de cellule (200) comportant une partie centrale (202) et deux parties bords (204) des deux côtés de la partie centrale,
**caractérisé en ce que** le couvercle de cellule (200) a une forme qui est inclinée vers le haut à partir de la partie centrale (202) vers les deux parties bords (204) qui sont des parties d'extrémité dans la direction longitudinale (X).

2. Bloc-batterie selon la revendication 1, dans lequel :
le couvercle de cellule (200) est formé de sorte qu'une valeur de longueur dans le sens de la largeur des parties d'extrémité soit supérieure à la valeur de longueur dans le sens de la largeur de la partie centrale (202, 212, 222).

3. Bloc-batterie selon la revendication 1, dans lequel :
la cellule de batterie (110) est disposée verticalement de sorte qu'un bord corresponde à la surface de fond (312, 412) du boîtier de bloc (300), et
le couvercle de cellule (200) recouvre un bord supérieur de la cellule de batterie (110) disposée verticalement, et sa surface inférieure est ouverte de sorte qu'elle ne recouvre pas le bord inférieur de la cellule de batterie (110).

4. Bloc-batterie selon la revendication 1, dans lequel :
le couvercle de cellule (200) comporte une deuxième surface (220) et une troisième surface (230) disposées en parallèle à une surface de la cellule de batterie (110), et une première surface (210) s'étendant entre la deuxième surface (220) et la troisième surface (230), et
une section transversale du couvercle de cellule (200) a une forme de n.

5. Bloc-batterie selon la revendication 4, dans lequel :
la deuxième surface (220) comporte une seconde partie centrale (222) et une seconde partie bord (224), et
une valeur de longueur dans le sens de la largeur de la seconde partie centrale (222) est inférieure à une valeur de longueur dans le sens de la largeur de la seconde partie bord (224).

6. Bloc-batterie selon la revendication 4, dans lequel :
un bord latéral supérieur de la deuxième surface (220) a une forme qui est inclinée vers le haut vers une partie d'extrémité de la deuxième surface (220) dans la direction longitudinale (X).

7. Bloc-batterie selon la revendication 4, dans lequel :
une section transversale de la première surface (210) dans la direction en largeur a une forme qui est inclinée vers le haut vers la partie d'extrémité dans la direction longitudinale (X).

8. Bloc-batterie selon la revendication 4, dans lequel :
le couvercle de cellule (200) comporte une quatrième surface (240) s'étendant entre la première surface (210), la deuxième surface (220) et la troisième surface (230).

9. Bloc-batterie selon la revendication 8, dans lequel :
la quatrième surface (240) recouvre partiellement une partie d'extrémité ouverte de la direction longitudinale (X) du couvercle de cellule (200).

10. Bloc-batterie selon la revendication 1, dans lequel :
la surface de fond (312, 412) du boîtier de bloc (300) est dotée d'un trou d'aération (330, 430) communiquant avec l'extérieur.

11. Bloc-batterie selon la revendication 10, dans lequel :
le trou d'aération (330, 430) est situé à une position correspondant à une partie d'extrémité de l'unité de cellule (100) dans la direction longitudinale (X).

12. Bloc-batterie selon la revendication 10, dans lequel :
les trous d'aération (330, 430) sont prévus en plusieurs exemplaires, et la pluralité de trous d'aération (330, 430) sont situés côte à côte le long d'une ligne droite.

13. Bloc-batterie selon la revendication 1, dans lequel :
la pluralité d'unités de cellule (100) sont reçues dans le boîtier de bloc (300) tout en étant reçues dans un boîtier séparé.

14. Dispositif comprenant le bloc-batterie selon la revendication 1.
